Europäisches Patentamt

(19) European Patent Office

Office européen des brevets

(11) Publication number : **0 300 628 B1**

## EUROPEAN PATENT SPECIFICATION

(12)

(45) Date of publication of patent specification :
13.11.91 Bulletin 91/46

(51) Int. Cl.⁵ : **B65H 55/00**

(21) Application number : **88305914.9**

(22) Date of filing : **29.06.88**

(54) Deep nested filament winding.

Divisional application 91200416.5 filed on
29/06/88.

(30) Priority : **02.07.87 US 69353**

(43) Date of publication of application :
**25.01.89 Bulletin 89/04**

(45) Publication of the grant of the patent :
**13.11.91 Bulletin 91/46**

(84) Designated Contracting States :
**CH DE ES FR GB LI SE**

(56) References cited :
**EP-A- 0 207 844**
**DE-A- 3 201 019**
**FR-A- 717 497**
**US-A- 2 734 695**

(73) Proprietor : **Hughes Aircraft Company**
**7200 Hughes Terrace P.O. Box 45066**
**Los Angeles, California 90045-0066 (US)**

(72) Inventor : **LeCompte, George W.**
**8620 North Pomona Road**
**Tucson Arizona 85704 (US)**

(74) Representative : **Colgan, Stephen James et al**
**CARPMAELS & RANSFORD 43 Bloomsbury**
**Square**
**London WC1A 2RA (GB)**

## Description

### BACKGROUND OF THE INVENTION

#### 1. Field of the Invention

This invention relates to a filament winding structure and technique and particularly to one that produces a densely packed and mechanically stable filament winding.

#### 2. Description of Related Art

Many modern weapon systems utilize a launched missile in which guidance information is transferred between it and a firing platform via a data link in the form of an electrical conductor or a fiber optic filament. Present weapon systems employing such techniques include the so-called TOW missile (i.e. Tube launched, Optically tracked, Wire guided missile). In order to provide adequate range for the guided projectile, it is necessary to store a very long length of wire or fiber optic filament within the weapon system. Typically, a winding is provided on a spool which pays out filament at an extremely high rate as the projectile is propelled toward the target.

A number of parameters must be considered in designing a winding of the type used to provide a data link for a guided missile. In order to provide efficient packaging, it is desirable to provide a winding which is dense and compact. Additionally, the winding should be structurally stable to enable it to retain its wound configuration during storage, handling and dispensing, thus eliminating or reducing the necessity of employing adhesives to maintain winding stability. Yet another objective in the design of such windings is to minimize filament payout drag.

Most high speed filament dispensers now in use employ closely spaced precision windings in which each filament turn nests between turns of the previous layer. Because such designs will not maintain regular geometry if wound against a flat radial flange surface, each layer is stepped back several turns at its axial ends from the underlying layer to maintain winding stability. These winding techniques result in tapered winding ends which reduce the volumetric efficiency of the winding. Another disadvantage of some prior art winding techniques is high drag imposed during filament payout since the windings must be displaced in a radially outward direction a significant distance in order to clear other wraps as the filament is withdrawn from the winding.

FR-A-717497 discloses and illustrates the closest prior art concerning as well a method of forming a winding of filament as a filament winding assembly, said assembly comprising a spool having two fixed flanges, and a √3 times the filament diameter.

US-A-2734695 illustrates a spool, onto which a filament is to be wound, consisting of a center post and two fixed flanges. The center post incudes a plurality of guide grooves which advance axially in two equal steps to provide the total pitch distance, which in this case is equal to one filament diameter.

In addition, DE-A-3201019 discloses a filament winding in which axial withdrawal of the filament is facilitated.

### SUMMARY OF THE INVENTION

An improved filament winding in accordance with this invention provides a filament winding which is volumetrically efficient, mechanically stable, and which features low payout drag. The windings are spaced apart a specific distance which results in layers of the filaments being deeply nested between filaments of the underlying layer of the winding, which provides stability and enables the filament to be wound against a flat radial flange.

In particular, the invention provides a method of forming a winding of filament comprising the steps of:

providing a spool having a center post and first and second radially projecting flanges ;

wrapping said filament onto said spool center post such that said filament advances axially with respect to said center post to provide a total pitch distance (P) of approximately √3 times the diameter of said filament, said filament advancing axially in a first axial direction with respect to said center post and then reversing to advance in a second axial direction with respect to said center post, said wrapping step continuing by alternately reversing the axial advancement of said filament to define a plurality of filament layers, said layers of said filaments having first filament segments which contact said first flange and second filament segments which contact said second flange ; and

removing said second flange, thereby enabling said filament to be payed out when pulled axially with respect to said winding.

The invention also provides a filament winding assembly of a type enabling filament to be withdrawn axially with respect to said winding, comprising :

a cylindrically shaped spool having a center post, a first flange projecting radially with respect to said center post and a second radially extending removable flange axially spaced from said first flange ; and

filament wrapped onto said center post by wrapping said filament onto said spool such that said filament advances axially with respect to said center post for each wrap which provides a total pitch distance (P) of approximately √3 times the diameter of said filament, said filament advancing axially in a first axial direction and then reversing to advance in a second axial direction, said wrapping continuing by alternately reversing the direction of axial advancement of said filaments to define a plurality of filament layers, said layers of said filaments having first filament segments which contact said first flange and second filament segments which contact said second flange.

Additional benefits and advantages of the present invention will become apparent to those skilled in the art to which this invention relates from the subsequent description of the preferred embodiments and the appended claims, taken in conjunction with the accompanying drawings.

## BRIEF DESCRIPTION OF THE DRAWINGS

FIG. 1 is a pictorial view of a winding in accordance with the prior art ;

FIG. 2 is a pictorial view of a winding in accordance with a first exemplary prior art technique ;

FIG. 3 is a partial cross-sectional view showing a modified construction of the winding shown in FIG. 1 having pitch control grooves ;

FIG. 4 is a pictorial view of a deep nested filament winding in accordance with a first embodiment of this invention with a portion therein shown in cross section and a portion shown as a pictorial view ; and

FIG. 5 is a partial pictorial view and partial cross-sectional view of a deep nested filament winding in accordance with a second embodiment of this invention in which the pitch spacing is slightly reduced from that of the embodiment shown in FIG. 4.

## DETAILED DESCRIPTION OF THE INVENTION

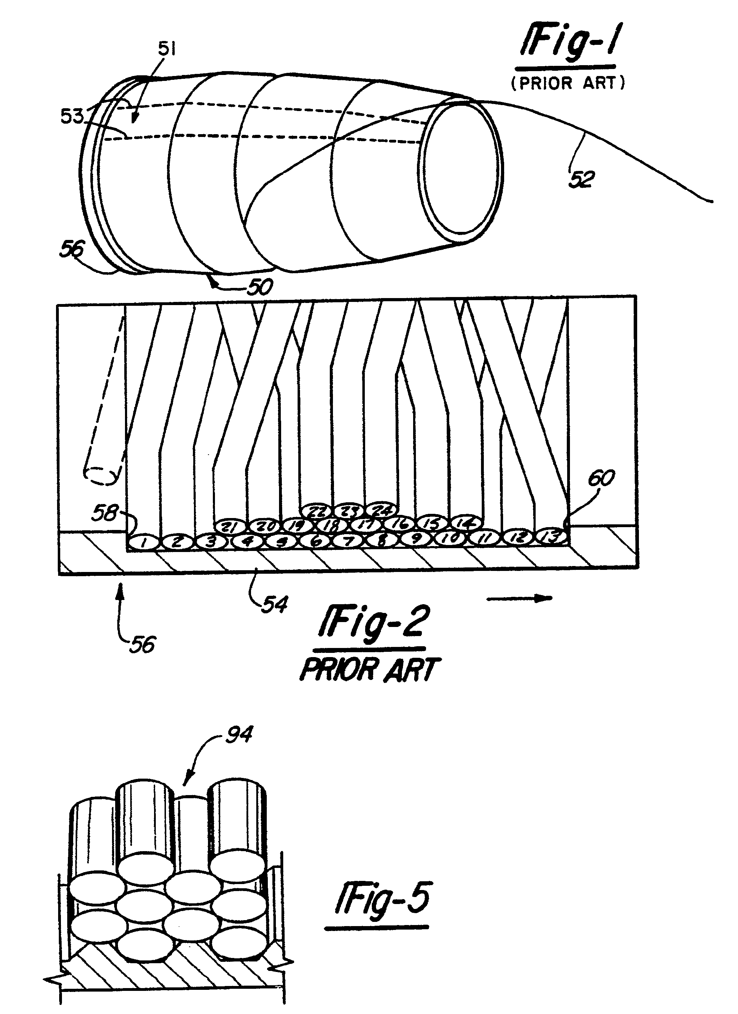

With particular reference to FIGS. 1 through 3, a precision filament windings according to the prior art will be described. These windings are particularly adapted to enable high speed payout of filament usable in connection with guided missile systems. These techniques are described to better illustrate the differences and advantages of the present invention as compared with the prior art. For several of the windings shown, the cross-sectional views of each of the turns of the filaments are numbered to show the order in which the winding wraps are developed.

FIG. 1 shows the general arrangement of a precision-wound filament dispenser 50 incorporating the prior art. The winding is done on tapered spool 56 to reduce the drag as filament 52 is drawn off over the end of the dispenser, which is rigidly fixed. Because alternate layers must be wound as right-hand and left-hand helixes, filament 52 cannot always remain nested between turns of the preceding layer, but must crossover the underlying filament twice per turn. Maintaining regular crossover geometry is an important element of precision filament winding.

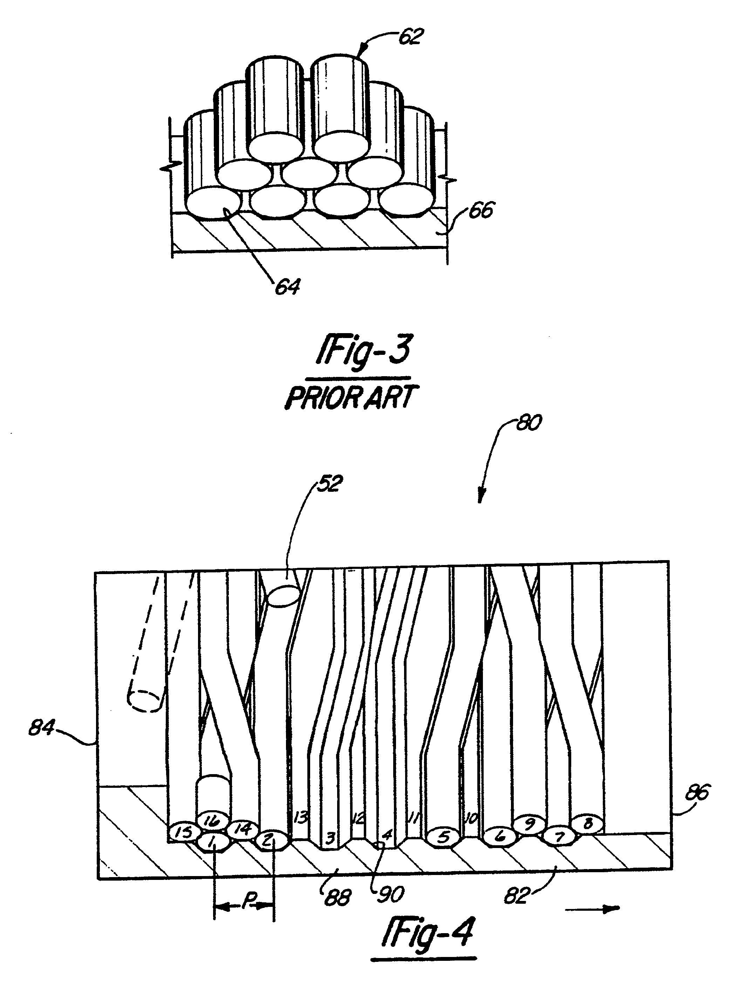

The area 51 in which the crossovers occur is illustrated as the area between dashed lines 53 extending the length of spool 56. The crossovers illustrated in FIG. 2 and FIG. 4 occur in such an area 51 on a typical spool.

FIG. 2 illustrates details of crossovers and layer stepbacks of the precision winding technique in accordance with the prior art. Winding 50 is composed of a number of wraps of filament 52 which are wound upon center post 54 of spool 56. Spool 56 features a pair of radially extending flanges 58 and 60 which define the longitudinal boundaries of winding 50. FIG. 2 shows a portion of winding 50 in a sectioned configuration to better illustrate the manner of winding of filaments 52. The first layer of filaments indicated by wraps numbers 1 through 13 is first laid onto the outer surface of spool 56 and generally defines a helix. As shown in FIG. 2, each of the turns advances a full pitch (distance of axial advancement per turn) in one step for each turn. The first layer of windings begins with turn number 1 and ends with turn number 13, whereupon the axial direction of advancement is reversed to form a second layer comprised of turns 14 through 21. The turns of the second layer also advance the full pitch distance in one step which results in filament 52 of the second layer crossing over turns of the first layer twice for each turn. At turn 21, the direction of advancement of filaments 52 is again reversed, thus forming the third layer comprising wraps 22 through 24. For winding 50, adjacent wraps of filament 52 are placed immediately proximate one another in touching or near touching relationship. This configuration will not maintain regular geometry if wound against a flat, radially extending flange. Consequently, each filament layer is stepped back several turns at its ends from the ends of the preceding filament layer to provide mechanical stability. This prior art technique, therefore, results in inefficient winding packing since it requires a spool having a longer axial length than would otherwise be necessary to store a given length of filament 52.

In operation, filament 52 would be payed out from winding 50 in the direction of the arrow in FIG. 2 such that the filament would be unwrapped from spool 56 in a reverse numerical order starting with wrap number 24 and ending at wrap number 1. Besides the poor volumetric efficiency mentioned above, another disadvantage associated with winding 50 is the amount of friction encountered when filament 52 is payed out. The outermost layer comprising turns 22 through 24 can be unwrapped easily ; however, the second layer comprising turns 14 through 21 imposes greater drag upon filament payout. Such increased drag is attributable to the fact that each of the turns of the second layer must be displaced in an outward radial direction by an amount equal to its diameter in order to clear the adjacent turn.

FIG. 3 provides a partial cross-sectional view of winding 62 which is substantially identical to winding 50 shown in FIG. 1 except that pitch control grooves 64 are formed within spool 66. Grooves 64 establish the positioning of the base layer of filaments. FIG. 3 further illustrates a pitch spacing which accommodates slight variations in filament diameter by providing small gaps between adjacent filament turns.

Now with reference to FIG. 4, winding 80 in accordance with the present invention is shown which is referred to as a "deep nested" winding. To better illustrate the configuration of winding 80, several of the filament wraps are removed. Wrap numbers for the filament wraps removed from FIG. 4 are on the surface touching the associated wrap number. FIG. 4 shows spool 82 with permanent radially extending flange 84 installed at one end of center post 88 and temporary flange 86 located at the opposite end of the center post. Temporary flange 86 is used during filament winding and is later removed to permit filament payout. As shown in FIG. 4, a significant axial spacing is provided between adjacent turns of filament 52. This inventor has found that a pitch spacing, designated by letter "P" in FIG. 4, of about the square root of 3 (i.e. $\sqrt{3}$) times the diameter of filament 52 provides the desired winding geometry. A pitch distance of slightly less than this ideal spacing may be employed to accommodate minor variations in the diameter of filament 52. When winding filament 52 axially along center post 88, the filament wraps become deeply nested about halfway into the filaments of the underlying layer, thus providing good mechanical stability. This pitch distance also provides a geometry which enables winding against flat end flanges 84 and 86.

Pitch control grooves 90 are provided within center post 88 to establish the configuration of the base filament layer. Several turns of the layers of filaments of winding 80 are removed to better illustrate the interrelationships of the winding turns and layers. Pitch control grooves 90 provide for two steps of axial advancement of filament 52 for each turn of filament around spool 82. In the region of crossover of the second and subsequent layers over filaments of preceding layers, an intentional pairing is provided between adjacent wraps. For example, grooves 90 provided for wrap numbers 3 and 4 are intentionally in touching or near touching relationship when the turns advance axially, whereas a gap is provided between turn numbers 2 and 3, and turn numbers 4 and 5 where these turns advance. This inventor has discovered, quite unexpectedly, that once the pairing relationship is established in the base layer it occurs spontaneously in subsequent layers during automatic winding, thus providing regular winding geometry with minimal control or manual adjustment required to maintain the pairing. Filaments 52 advance axially to the full pitch distance in two equal steps spaced 180° from each other around a periphery of spool 80. Alternatively, however, the positions of the advancement steps may be located at relative positions other than 180°. Once winding 80 is fully developed, adhesives applied during winding or upon completion maintain the winding in the desired configuration when temporary flange 86 is removed.

As the wraps of filament 52 are payed out from winding 80 in the direction of the arrow in FIG. 4, the maximum amount of immediately required displacement of the filament in a radially outward direction is no more than one-half its diameter. This minimal requirement for filament displacement provides acceptable payout drag characteristics.

FIG. 5 illustrates a second embodiment of a winding 94 in which the pitch distance of filament wraps is slightly less than the ideal pitch of $\sqrt{3}$ times the filament diameter. This modified pitch spacing accommodates minor diameter variations in filament 52 yet provides the advantages associated with "deep nesting" the winding.

While the above description constitutes the preferred embodiments of the present invention, it will be appreciated that the invention is susceptible to modification, variation and change without departing from the scope of the accompanying claims. It should also be recognized that the deep-nesting winding technique can be used in any winding application where dense, regular packing against flanges is desirable. This can include products from small electrical inductors to large cable drums.

## Claims

1. A method of forming a winding (80) of filament (52) comprising the steps of :

providing a spool (82) having a center post (88) and first (84) and second (86) radially projecting flanges ;

wrapping said filament onto said spool center post such that said filament advances axially with respect to said center post to provide a total pitch distance (P) of approximately $\sqrt{3}$ times the diameter of said filament, said filament advancing axially in a first axial direction with respect to said center post and then reversing to advance in a second axial direction with respect to said center post, said wrapping step continuing by alternately reversing the axial advancement of said filament to define a plurality of filament layers, said layers of said filaments having first filament segments which contact said first flange and second filament segments which contact said second flange ; and

removing said second flange, thereby enabling said filament to be payed out when pulled axially with respect to said winding.

2. A method of forming a winding of filament according to claim 1 wherein said filament advances with respect to said center post in two equal steps to provide said total pitch distance.

3. A method of forming a winding of filament according to claim 2 wherein said steps of equal axial advancement of said filament with respect to said spool center post occur at positions 180° apart with respect to said spool center post.

4. A method of forming a winding of filament according to claim 1 further comprising the step of coating said filament with an adhesive, thereby enhancing the mechanical stability of said winding.

5. A method of forming a winding of filament according to claim 1 wherein at least one axial end of said winding has a tapered configuration by reducing the number of turns of said filament of the layers on said spool as layers are developed in a radially outward direction.

6. A method of forming a winding of filament according to claim 1 wherein said axial advancement of said filament with respect to said spool center post defines a crossover region and adjacent filament segments in said crossover region are alternately forced together and forced apart to define separated pairs of filament segments.

7. A filament winding assembly (80) of a type enabling filament to be withdrawn axially with respect to said winding, comprising :

a cylindrically shaped spool (82) having a center post (88) ; a first flange (84) projecting radially with respect to said center post and a second radially extending removable flange (86) axially spaced from said first flange ; and

filament (52) wrapped onto said center post by wrapping said filament onto said spool such that said filament advances axially with respect to said center post for each wrap which provides a total pitch distance (P) of approximately √3 times the diameter of said filament, said filament advancing axially in a first axial direction and then reversing to advance in a second axial direction, said wrapping continuing by alternately reversing the direction of axial advancement of said filaments to define a plurality of filament layers, said layers of said filaments having first filament segments which contact said first flange and second filament segments which contact said second flange.

8. A filament winding assembly according to claim 7 wherein said axial advancement of said filament with respect to said center post occurs in two equal steps.

9. A filament winding assembly according to claim 8 wherein said steps of equal axial advancement of said filament along said spool center post occur at positions 180° apart with respect to said spool center post.

10. A filament winding assembly according to claim 7 wherein said spool center post defines pitch control grooves (90) in its outer surface to support the first layer of filament in the desired configuration.

11. A filament winding assembly according to claim 7 wherein said winding defines a tapered axial end by reducing the number of turns of said filament of the layers on said spool as, layers are developed in a radially outward direction.

12. A filament winding assembly according to claim 10 wherein the spool includes a groove having an overall pitch along the center post approximately equal to √3 times the diameter of the filament and including at least two discrete steps for each filament turn such that the pitch is provided in discrete steps about the periphery of the center post, each such step being paired axially along the center post and disposed such that the steps of each pair are proximate each other and adjacent pairs are spaced apart.

## Patentansprüche

1. Ein Verfahren zur Herstellung einer Wicklung (80) eines Fadens (52) mit den folgenden Schritten :

Bereitstellen einer Spule (82) mit einem mittigen Kern (88) und ersten (84) und zweiten (86) radial vorstehenden Flanschen ;

Wickeln des Fadens auf den mittigen Kern der Spule derart, daß der Faden axial relativ zu dem mittigen Kern fortschreitet, um eine Gesamt-Wicklungsdistanz (P) von annähernd √3-mal dem Durchmesser des Fadens zu erzeugen, wobei der Faden bezüglich des mittigen Kerns axial in eine erste axiale Richtung fortschreitet und nachfolgend in einer zweiten axialen Richtung bezüglich des mittigen Kerns zurückkehrt, wobei der Wickelschritt fortschreitet durch abwechselndes axiales Umkehren des Fortschreitens des Fadens, um eine Mehrzahl von Fadenschichten zu definieren, wobei die Schichten des Fadens erste Fadensegmente haben, welche mit dem ersten Flansch kontaktieren und zweite Fadensegmente haben, welche mit dem zweiten Flansch kontaktieren ; und

Entfernen des zweiten Flansches, so daß es dem Faden möglich gemacht wird, sich abzuwickeln, wenn er bezüglich der Wicklung axial abgezogen wird.

2. Ein Verfahren zum Bilden einer Wicklung eines Fadens gemäß Anspruch 1, wobei der Faden bezüglich dem mittigen Kern in zwei gleichen Schritten fortschreitet, um die Gesamt-Wicklungsdistanz zu erzeugen.

3. Ein Verfahren zum Bilden einer Wicklung eines Fadens gemäß Anspruch 2, wobei die Schritte des gleichen axialen Fortschreitens des Fadens bezüglich des mittigen Kerns der Spule an Lagen auftreten, welche bezüglich des mittigen Kerns der Spule um 180° getrennt voneinander sind.

4. Ein Verfahren zum Bilden einer Wic ung eines Fadens gemäß Anspruch 1, weiterhin mit dem Schritt des Überziehens des Fadens mit einem Kleber, um die mechanische Stabilität der Wicklung zu verbessern.

5. Ein Verfahren zum Bilden einer Wicklung eines Fadens gemäß Anspruch 1, wobei wenigstens ein axiales Ende der Wicklung eine abgeschrägte Konfiguration hat, indem die Anzahl von Windungen des Fadens in den Schichten auf der Spule verringert wird, während die Schichten sich in einer radial nach außen gerichteten Richtung aufbauen.

6. Ein Verfahren zum Bilden einer Wicklung eines Fadens gemäß Anspruch 1, wobei das axiale Fortschreiten des Fadens bezüglich des mittigen Kerns der Spule einen Kreuzungsbereich definiert und benachbarte Fadensegmente in dem Kreuzungsbereich abwechselnd zusammen- und auseinandergedrängt werden, um voneinander getrennte Paare von Fadensegmenten zu definieren.

7. Eine Fadenwicklungsanordnung (80) des Typs, welche ein axiales Abziehen des Fadens bezüglich der Wicklung ermöglicht, mit:

einer zylinderförmigen Spule (82) mit einem mittigen Kern (88), einem ersten Flansch (84), der sich bezüglich des mittigen Kerns radial nach außen erstreckt und einem zweiten sich radial erstreckenden entfernbaren Flansch (86), der in axialem Abstand zu dem ersten Flansch ist; und einem Faden (52), der auf den mittigen Kern aufgewickelt ist durch Wickeln des Fadens auf die Spule derart, daß der Faden axial bezüglich des mittigen Kerns pro Wicklung fortschreitet derart, daß eine Gesamt-Wicklungsdistanz (P) von annähernd √3-mal dem Durchmesser des Fadens entsteht, wobei der Faden axial in einer ersten axialen Richtung fortschreitet und dann umkehrt, um eine zweite axiale Richtung fortzuschreiten, wobei das Wickeln fortgeführt wird durch abwechselndes Umkehren der Richtung des axialen Fortschreitens des Fadens, um eine Mehrzahl von Fadenschichten zu definieren, wobei die Schichten des Fadens erste Fadensegmente haben, welche mit dem ersten Flansch kontaktieren und zweite Fadensegmente haben, welche mit dem zweiten Flansch kontaktieren.

8. Eine Fadenwicklungsanordnung nach Anspruch 7, wobei das axiale Fortschreiten des Fadens bezüglich des mittigen Kerns in zwei gleichen Schritten erfolgt.

9. Eine Fadenwicklungsanordnung nach Anspruch 8, wobei die Schritte des gleichen axialen Fortschreitens des Fadens entlang des mittigen Kerns der Spule in Positionen auftreten, welche bezüglich des mittigen Kerns der Spule um 180° voneinander getrennt sind.

10. Eine Fadenwicklungsanordnung nach Anspruch 7, worin der mittige Kern der Spule Ganghöhen-Steuerausnehmungen (90) an seiner äußeren Oberfläche definiert, um die erste Schicht des Fadens in der gewünschten Konfiguration zu unterstützen.

11. Eine Fadenwicklungsanordnung nach Anspruch 7, worin die Wicklung ein geneigtes axiales Ende dadurch definiert, daß die Anzahl von Windungen des Fadens der Schichten auf der Spule verringert werden, während die Schichten in radial nach außen gerichteter Richtung sich aufbauen.

12. Eine Fadenwicklungsanordnung nach Anspruch 10, worin die Spule eine Ausnehmung mit einer Gesamtganghöhe entlang des mittigen Kerns von etwa √3-mal dem Durchmesser des Fadens aufweist und wenigstens zwei voneinander getrennte Stufen für jede Fadenwindung derart aufweist, daß die Ganghöhe in voneinander getrennten Schritten um den Umfang des mittigen Kerns vorgesehen ist, wobei jeder dieser Schritte axial entlang des mittigen Kerns gepaart ist und so angeordnet ist, daß die Schritte von jedem Paar einander benachbart sind und nebeneinander liegende Paare voneinander getrennt sind.

## Revendications

1. Procédé de formation d'un enroulement (80) de filament (52), qui comprend les étapes suivantes:

— préparation d'une bobine (82) qui a un noyau central (88) et une première (84) et une seconde (86) joues radiales;

— bobinage dudit filament sur le noyau central de la bobine de façon que le filament avance axialement par rapport au noyau central avec un pas total d'avancement (P) égal approximativement à √3 fois le diamètre du filament, le filament avançant selon l'axe du noyau central, d'abord dans un premier sens, puis changeant de sens pour avancer dans le sens axial opposé, l'opération de bobinage se poursuivant en inversant alternativement le sens d'avancement axial du filament pour définir plusieurs couches de filaments, les couches des filaments comportant des premiers segments de filament qui touchent la première joue et des seconds segments de filament qui touchent la seconde joue; et

— démontage de la seconde joue, permettant ainsi le dévidage du filament quand il est tiré axialement par rapport à l'enroulement.

2. Procédé de réalisation d'un enroulement de filament selon la revendication 1, dans lequel le filament avance par rapport au noyau central selon deux décalages égaux pour former le pas total d'avancement.

3. Procédé de réalisation d'un enroulement de filament selon la revendication 2, dans lequel les décalages d'égal avancement axial du filament par rapport au noyau central de la bobine surviennent dans des positions espacées de 180° par rapport au noyau central de la bobine.

4. Procédé de réalisation d'un enroulement de filament selon la revendication 1, comprenant en outre l'étape de revêtement du filament au moyen d'un adhésif, renforçant ainsi la stabilité mécanique de l'enroulement.

5. Procédé de réalisation d'un enroulement de filament selon la revendication 1, dans lequel, à au moins une extrémité axiale, l'enroulement a une configuration de diamètre décroissant obtenue en diminuant le nombre de spires du filament dans les couches de la bobine au fur et à mesure que ces couches se développent radialement vers l'extérieur.

6. Procédé de réalisation d'un enroulement de filament selon la revendication 1, dans lequel l'avancement axial du filament par rapport au noyau central de la bobine crée une zone de croisement, des segments adjacents du filament dans la zone de croisement étant alternativement rapprochés et écartés de force pour constituer des paires séparées de segments de filament.

7. Assemblage (80) d'enroulement de filament d'un type permettant de dévider le filament axialement par rapport audit enroulement, comprenant :

— une bobine (82) de forme cylindrique ayant un noyau central (88), une première joue (84) en saillie radialement par rapport au noyau central et une seconde joue radiale amovible (86) à une certaine distance axiale de la première joue ;

— du filament (52) bobiné sur le noyau central par bobinage du filament sur la bobine de façon telle que le filament avance axialement par rapport au noyau central pour chaque spire qui forme un pas total d'avancement (P) égal approximativement à √3 fois le diamètre du filament, le filament avançant selon l'axe du noyau central, d'abord dans un premier sens, puis changeant de sens pour avancer dans le sens axial opposé, l'opération de bobinage se poursuivant en inversant alternativement le sens d'avancement axial du filament pour définir plusieurs couches de filaments, les couches de filaments comportant des premiers segments de filament qui touchent la première joue et des seconds segments de filament qui touchent la seconde joue.

8. Assemblage d'enroulement de filament selon la revendication 7, dans lequel le filament avance axialement par rapport au noyau central suivant deux décalages égaux.

9. Assemblage d'enroulement de filament selon la revendication 8, dans lequel les décalages d'égal avancement axial du filament le long du noyau central de la bobine surviennent dans des positions espacées de 180° par rapport au noyau central de la bobine.

10. Assemblage d'enroulement de filament selon la revendication 7, dans lequel le noyau central de la bobine comprend sur sa surface extérieure des gorges (90) de réglage du pas pour porter la première couche de filament dans la configuration désirée.

11. Assemblage d'enroulement de filament selon la revendication 7, dans lequel l'enroulement forme une extrémité axiale de diamètre décroissant obtenue en diminuant le nombre de spires du filament dans les couches de la bobine au fur et à mesure que ces couches se développent radialement vers l'extérieur.

12. Assemblage d'enroulement de filament selon la revendication 10, dans lequel la bobine comprend une gorge dont le pas total le long du noyau central est approximativement égal à √3 fois le diamètre du filament et qui comporte au moins deux décalages séparés pour chaque tour du filament, si bien que le pas est obtenu par des décalages séparés autour de la périphérie du noyau central, ces décalages étant respectivement appariés axialement le long du noyau central et disposés de telle sorte que les décalages de chaque paire sont proches les uns des autres et que des paires adjacentes sont espacées l'une de l'autre.

*Fig-1*
(PRIOR ART)

51
53
52
56
50

58
60
54

56

*Fig-2*
PRIOR ART

94

*Fig-5*

8

EP 0 300 628 B1

_IFig-3_
_PRIOR ART_

_IFig-4_

9